# EUROPEAN PATENT SPECIFICATION

(11) **EP 0 766 461 B1**
(45) Date of publication and mention of the grant of the patent: **09.08.2000**
(21) Application number: 96202639.9
(22) Date of filing: 20.09.1996
(51) Int. Cl.: H04N 5/44

(54) **Caption detection**
Titeldetektion
Détection de sous-titrage

(30) Priority: 26.09.1995 JP 27170295
(43) Date of publication of application: 02.04.1997
(73) Proprietor: Koninklijke Philips Electronics N.V., 5621 BA Eindhoven (NL)
(72) Inventor: Fujisaki, Eiji, Internationaal Octrooibureau B.V., 5656 AA Eindhoven (NL)
(74) Representative: Steenbeek, Leonardus Johannes

(56) References cited:
- WO-A-95/01051
- US-A- 5 220 423
- IEEE TRANSACTIONS ON CONSUMER ELECTRONICS, vol. 40, no. 3, August 1994, NEW YORK US, pages 743-751, XP000471244 NAKAGAKI ET AL: "wide aspect receiver with aspect detection and non-linear control for picture quality"
- PATENT ABSTRACTS OF JAPAN vol. 13, no. 374 (E-808), 18 August 1989 & JP 01 126876 A (SHARP), 18 May 1989,

## Description

The present invention relates to a method and a device for detecting captions, which are missed from a screen, (into an image region) when an image made for a television with an aspect ratio of 4:3, and comprising captions, is displayed as expanded on a television with an aspect ratio of 16:9 .

Generally, a 16:9 television is provided with a function for expanding the image to the whole of the screen. But, when this image is merely performed as expanded, any caption lines are missed from the screen. For preventing the captions from missing when the image is expanded, i.e. for realizing an expanded image in which the captions are also displayed, a caption moving device, is used in a prior art. The operating function will be explained as follows.

The image information is examined as to whether this information represents a caption or an image.

Generally, captions are white (an achromatic color). As regards a TV signal, a chroma (color) signal is not included in an image signal which represents white but this image signal consists of only a high level luminance signal. A caption judging part is aimed at this point, which is provided with a predetermined reference level for judging whether the inputted image signal represents a caption or not. Namely, the caption judging part judges that only the inputted image information of which a luminance level exceeds the reference level, i.e. only the image information of a high luminance level, represents a caption.

As the above description, an image of a high luminance level is also judged captions in the conventional 16:9 television. As a result of this, the screen during expanding is very distinct because such moved image and an image present in the caption insertion region are overlapped.

In view of the above problem, it is an object of the invention to provide a caption detection method and device for moving only captions as to solve the distinctness of the screen during expanding an image. A further aspect of the invention is aimed that edging whose color is usually black is applied to a caption of, for example, the telecine and a sharp change of luminance level is occurred between a white (a high luminance) caption and the black (a low luminance) edging.

To this end, a first aspect of the invention provides a captions detection devices as defined in claim 1. A second aspect of the invention provides a caption detection method as defined in claim 3. A third aspect of the invention provides a video display device as defined in claim 5. Advantageous embodiments are defined in the dependent claims.

A caption detecting method involving measuring the rate of change of a luminance signal is disclosed in JP-A-01 126 876.

Embodiments of the present invention will now be described with reference to the accompanying drawings, in which:
Fig. 1 is a block diagram of an embodiment of a caption moving device according to the invention;
Fig. 2 is a schematic diagram of a caption signal outputted from a caption judging part to be displayed;
Fig. 3 is a picture of a 16:9 television which shows an image of a telecine for a 4:3 television comprising captions;
Fig. 4 is a picture of a 16:9 television in the case that the image shown in Fig. 3 is expanded by an expanding function which the 16:9 television comprises without performing a caption moving process;
Fig. 5 is a picture of a 16:9 television in that the case the image shown in Fig. 3 is expanded by an expanding function which the 16:9 television comprises with performing a caption moving process;
Fig. 6 is a block diagram of an embodiment of a conventional caption moving device;
Fig. 7 is an example of an image signal inputted to a caption moving device; and
Fig. 8 is a schematic diagram of a part of a general caption, around which edging is applied, to be displayed.

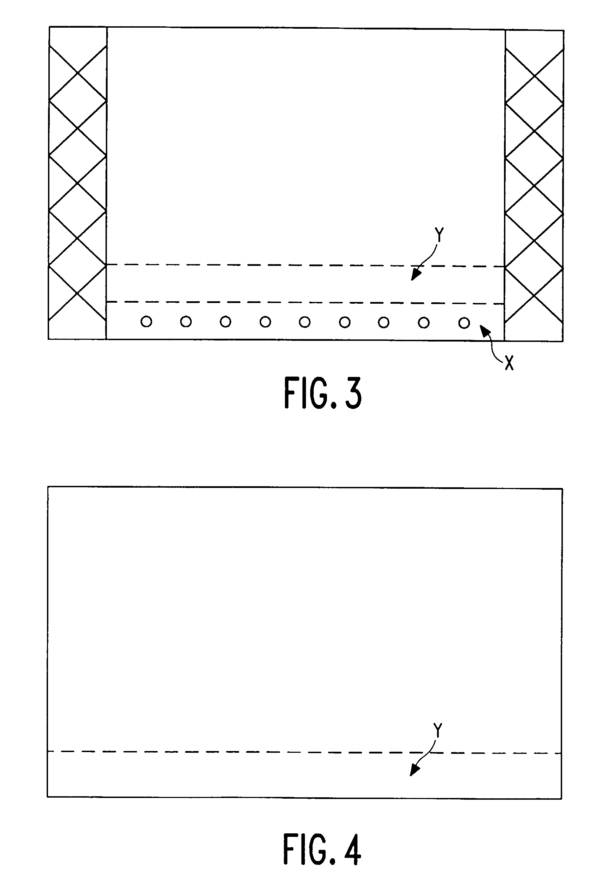

When an image of, for example, a telecine made for a 4:3 television comprising captions is displayed on a 16:9 television, a caption line shown by ○ is displayed in an image region, for example, as shown in Fig. 3. In Fig. 3, a region indicated by X is an image region in which captions are displayed and hereinafter will be referred as a caption region. Also, a region indicated by Y is an image region in which captions are inserted and hereinafter will be referred as a caption insertion region. As regards Y, it also will be the same in following figures.

Generally, the 16:9 television is provided with a function for expanding the image to the whole of the screen. But, when this image is merely performed as expanded, the caption line is missed from the screen as shown in Fig. 4.

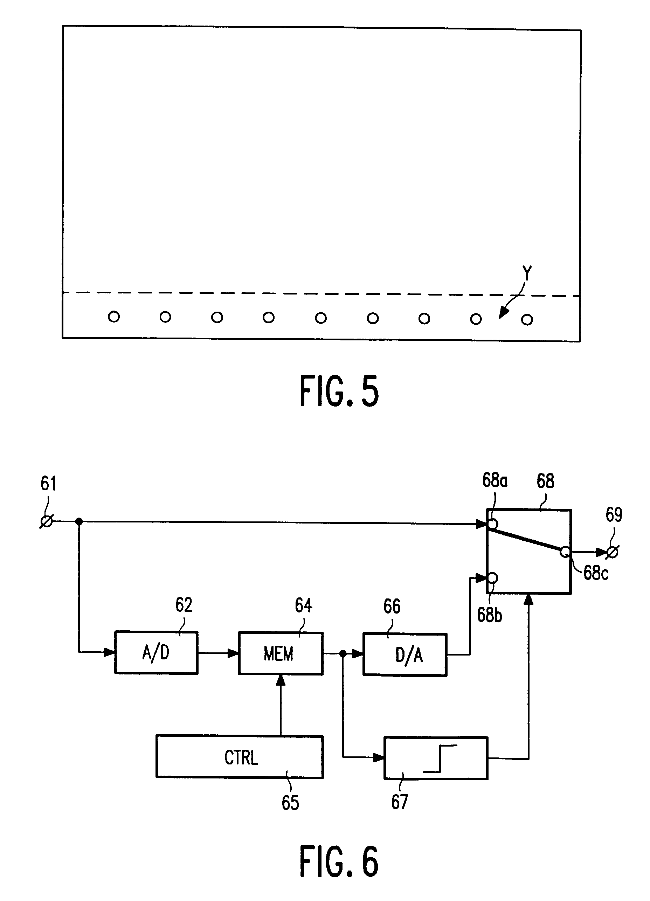

For preventing the captions from missing when the image is expanded, i.e. for realizing an image in which the captions are displayed as shown in Fig. 5, a caption moving device, for example, as illustrated by a block diagram in Fig. 6 is used in a prior art. The operating function will be explained as follows.

In Fig. 6, an input image signal from an image input 61 is inputted to an A/D converter 62 and an input terminal 68a of an image/caption changing part 68. The A/D converter 62 performs an A/D conversion of the input image signal to generate image information corresponding to this image signal. This image information is written into a memory (MEM) 64. The memory 64 has a capacity enough to at least store a signal which constructs the caption region, for example, indicated by X in Fig. 3. A control signal generating part (CTRL) 65 is connected to the memory 64. The control signal generating part 65 generates a control signal used for controlling a writing/reading position of the image information inputted to the memory 64. Based on the control signal generated by the control signal generating part 65, the memory 64 begins to write image information at a point of time when the image signal reaches to the caption region X of a certain field, begins to read the stored image information at a point of time when the image signal reaches to the caption insertion region, for example, indicated by Y of a next field and begins to write image information again at a point of time when the image signal reaches to the caption region X of this field. Subsequently, the image information is read from the memory 64 and then inputted to a D/A converter 66 and a caption judging part 67. The D/A converter 66 performs a D/A conversion of the image information to generate an image signal corresponding to this image information. This image signal is inputted to an input terminal 68b of the image/caption changing part 68.

On the other hand, the image information inputted to the caption judging part 67 is judged whether this information represents a caption or an image. If the inputted image information is judged a caption, for example, a high level control signal is outputted from the caption judging part 67 to the image/caption changing part 68. On the other hand, if the information is judged an image, for example, a low level control signal is outputted therefrom. The caption judging part 67 will be explained in detail later.

The image/caption changing part 68 changes a switch based on the control signal from the caption judging part 67. Namely, if the high level control signal is inputted from the caption judging part 67, the image/caption changing part 68 set the switch to a position 68b-68c. As a result of this, an image signal, which represents a caption, for example, one field before, is outputted from an image signal output 69. Also, if the low level control signal is inputted therefrom, the image/caption changing part 68 set the switch to a position 68a-68c. As a result of this, an image signal, which represents a newest image, is outputted from the output 69. The image signal is displayed on the screen after the expanding process by means of a conventional image expanding device (not shown). Thus, the caption does not miss from the screen (the image region) if the image expanding function which the 16:9 television comprises is performed.

The process performed by the caption judging part 67 will be explained in more detail. Generally, captions are white (an achromatic color). As regards a TV signal, a chroma (color) signal is not included in an image signal which represents white but this image signal consists of only a high level luminance signal. The caption judging part 67 is aimed at this point, which is provided with a predetermined reference level for judging whether the inputted image signal represents a caption or not. Namely, the caption judging part 67 judges that only the inputted image information of which a luminance level exceeds the reference level, i.e. only the image information of a high luminance level, represents a caption.

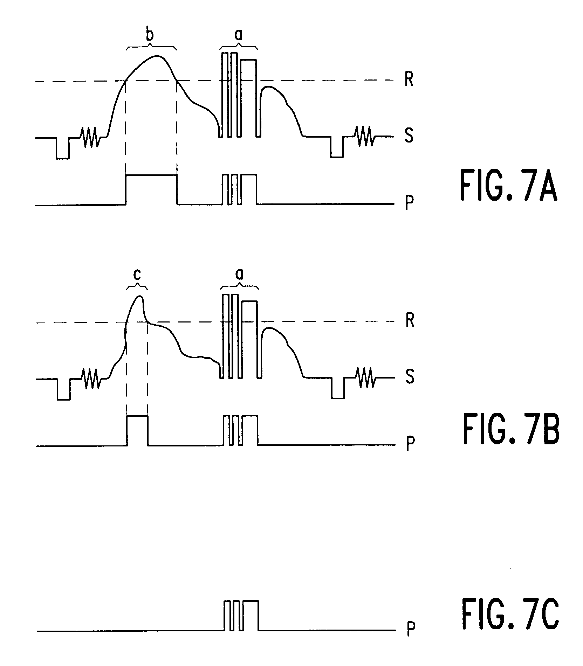

Now, it is assumed that an image signal S of a telecine as shown in Fig. 7A and B is inputted to the image signal input 61. A signal part as indicated by a of the image signal S in Fig. 7 represents captions. On the other hand, signal parts of a high luminance level as indicated by b and c in Fig. 7 generally exist in the image signal. Now, it is assumed that a broken line R indicates the reference level set to the caption judging part 67. If the caption judgment of the image signal S is performed at this level, not only the caption signal part a but also the high level luminance signal parts b and c representing an image are judged captions. As a result of this, a control signal P shown in Figs. 7A and 7B is outputted from the caption judging part 67 to the image/caption changing part 68 and consequently an image signal of a high luminance level other than captions is also outputted from the image signal output 69. Namely, when a luminance level of the image signal is merely compared by the caption judging part 67, an image of a high luminance level substantially same as that of captions is also judged captions and then moved.

As the above description, an image of a high luminance level is also judged captions in the conventional 16:9 television. As a result of this, the screen during expanding is very distinct because such moved image and an image present in the caption insertion region are overlapped.

In view of the above problem, it is an object of the invention to provide a caption moving device for moving only captions so as to solve the distinctness of the screen during expanding an image. A further aspect of the invention is aimed that edging whose color is usually black is applied to a caption of, for example, the telecine and a sharp change of luminance level is occurred between a white (a high luminance) caption and the black (a low luminance) edging as shown Fig. 8.

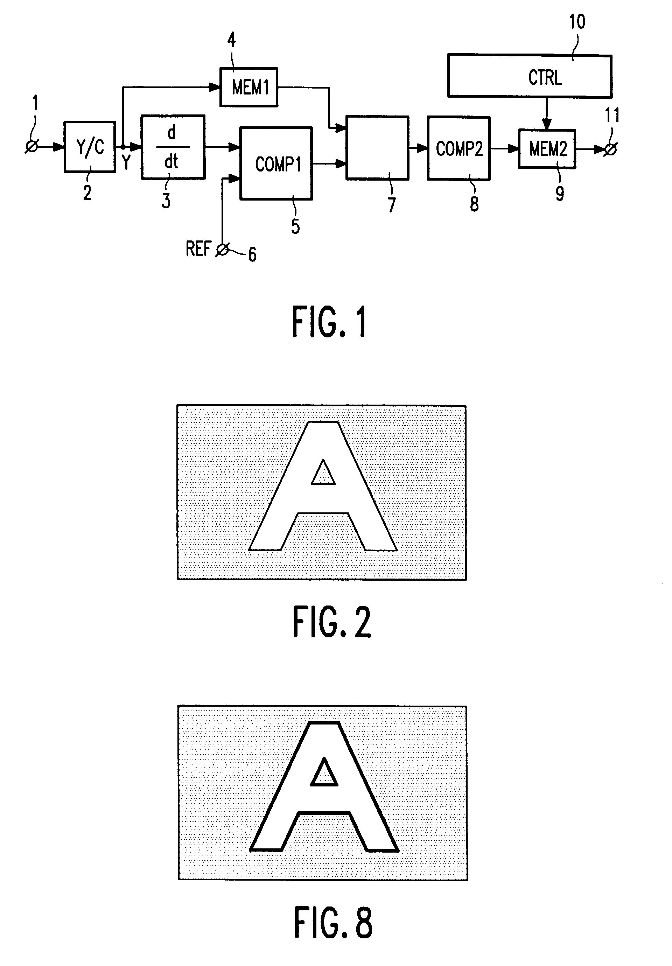

Fig. 1 shows a block diagram of an embodiment of a caption moving device according to the invention. The reference numeral 1 designates a image signal input, which is connected to a Y/C separating part 2. The Y/C separating part 2 is connected to a rate of change detecting part 3 and a first memory (MEMi) 4. The rate of change detecting part 3 is connected to a rate of change judging part 5. The rate of change judging part 5 is connected to a reference level signal input 6 which inputs a reference signal to judge caption edging, and a gate 7. Also, the first memory 4 is connected to the gate 7. The gate 7 is connected to a caption judging part 8. The caption judging part 8 is connected to a second memory (MEMe) 9. The second memory 9 is connected to a control signal generating part (CTRL) 10 which generates a control signal for controlling a writing/reading position of a caption signal inputted to the memory 9. Also, the second memory is connected to a caption signal output 11.

An input image signal inputted to the image signal input 1 is inputted to the Y/C separating part 2. At the Y/C separating part 2, an Y/C separation corresponding to the input image signal is performed to generate a luminance signal and a chroma signal corresponding to the input image signal. Symbol Y represents a luminance and symbol C represents a color. In this embodiment, only a luminance signal Y corresponding to the input image signal is outputted from the Y/C separating part 2.

The luminance signal is inputted to the rate of change detecting part 3. This rate of change detecting part 3 is a so-called differential circuit (d/dt). By the differential process performed in this circuit, the rate of change of the luminance level of the input luminance signal is detected. As regards this rate of change, the larger the value thereof means the larger the change of the luminance level. As a result of the detection of the rate of change, a rate of change signal corresponding to the detected rate of change is generated. This rate of change signal is outputted toward the rate of change judging part 5.

The rate of change judging part 5 is a so-called comparator (COMP1), which judges whether the inputted rate of change signal represents a rate of change more than the certain constant level or not. For this judgment, a reference signal (REF) of a certain level is inputted to the rate of change judging part 5 from the input 6. Then, the rate of change judging part 5 compares the rate of change level of the rate of change signal from the rate of change detecting part 3 with the reference level. When the rate of change level exceeds the reference level, i.e. when the rate of change is larger, for example, a high level control signal which represents valid is generated. On the other hand, when the rate of change level does not exceed the reference level, i.e. when the rate of change is smaller, for example, a low level control signal which represents invalid is generated. This control signal is outputted toward a gate 7.

On the other hand, the luminance signal outputted from the Y/C separating part 2 is also written into a first memory 4. In this first memory 4, the inputted luminance signal is stored for a certain period. This certain period is a period is necessary for the rate of change signal generating process of the luminance signal outputted from the Y/C separating part 2 in the rate of change detecting part 3 and for the rate of change judging process of the rate of change signal generated by said process in the rate of change judging part 5. After being stored for this period, the luminance signal is read to output toward the gate 7.

The gate 7 performs an output control of the luminance signal from the first memory 4 in accordance with the state of the control signal from the rate of change judging part 5. Namely, for example, only if the high level control signal is received from the rate of change judging part 5, the luminance signal from the first memory 4 is outputted.

The luminance signal outputted from the gate 7 is inputted to the caption judging part 8. The caption judging part 8 is a so-called comparator (COMP2), which compares a luminance level of the input luminance signal with a predetermined reference level. Based on this comparison result, this part 8 judges whether the signal represents a caption or an image. Namely, when the luminance level of the input luminance signal exceeds the reference level at the caption judging part 8, this luminance signal is judged to represent a caption and then, for example, a high level caption signal which represents valid is generated. On the other hand, when the input luminance signal doesn't exceed the reference level, this luminance signal is judged to represent an image and then, for example, a low level caption signal which represents invalid is generated. Then, this caption signal is written into the second memory 9. At this point, the caption signal written into the second memory 9 is that it represents only a caption which doesn't include the black edge part applied around the caption and the image part, for example, as shown in Fig. 2.

The second memory 9 comprises a capacity, for example, enough to at least store the signal which constructs the caption region indicated by X in Fig. 3. As described above, the control signal generating part 10 which generates a control signal using a writing and reading position control of the inputted caption signal is connected to the memory 9. Based on the control signal generated by the control signal generating part 10, the second memory 9 begins to write a caption signal at a point of time when the image signal reaches to the caption region X of a certain field, begins to read the stored caption signal at a point of time when the image signal reaches to, for example, the caption insertion region indicated by Y of a next field, and begins to write again the caption signal at a point of time when the image signal of this field reaches to the caption region X. Thus, the caption signal is written into and read from the second memory 9. After that, the caption signal read from the second memory 9 is outputted from the caption signal output 11 and then displayed on the screen after performing a conventional insertion process into the image part and a conventional expansion process by an image expanding device (not shown).

Thus, an image signal (a caption signal) which represents an image of a high luminance level is not outputted from the caption signal output 11 but a caption signal which represents only a caption, for example, prior to one field, from which the edge part is removed, is outputted to display together with a newest image signal on the screen.

As described above, according to the caption moving device of the present invention, not only an image signal of a high luminance level is merely judged a caption but also a caption is judged by further detecting a sharp rate of change of an luminance level which occurs between the black edging applied around a caption and this white caption. Therefore, an image part of a high luminance level is not moved into an image region by expanding an image but only a caption is inserted and therefore it is possible to realize a high quality expansion process in a television with an aspect ratio of 16:9.

## Claims

1. A caption detection device comprising:
means for receiving a luminance signal corresponding to an input image signal which represents an image comprising a caption region in which captions are displayed;
rate of change detecting means for detecting a rate of change of a luminance level of the luminance signal to generate a rate of change signal corresponding to the rate of change;
rate of change judging means for comparing a rate of change level of the rate of change signal with a level of a reference signal inputted separately and for setting a content of a control signal, which represents the comparison result, to valid when the rate of change level exceeds the reference level;
gate means for outputting the luminance signal only if the control signal from the rate of change judging means represents valid; and
caption judging means for comparing a luminance level of the luminance signal outputted from the gate means with a predetermined reference level and for setting a content of a caption signal, which represents the comparison result, to valid when the luminance signal exceeds the reference level.

2. A caption detection device as claimed in claim 1, further comprising:
storage means for storing the caption signal outputted from the caption judging means; and
control signal generating means for performing a writing control such that the caption signal corresponding to the image of the caption region is written into the storage means and a reading control such that the caption signal is read from the storage means;
wherein the reading control is performed when the caption signal corresponding to a caption insertion region in the image composed by the caption signal is generated.

3. A caption detection method comprising the steps of:
receiving a luminance signal corresponding to an input image signal which represents an image comprising a caption region in which captions are displayed;
detecting a rate of change of a luminance level of the luminance signal to generate a rate of change signal corresponding to the rate of change;
comparing a rate of change level of the rate of change signal with a level of a reference signal inputted separately and for setting a content of a control signal, which represents the comparison result, to valid when the rate of change level exceeds the reference level;
passing the luminance signal only if the control signal represents valid;
comparing a luminance level of the passed luminance signal with a predetermined reference level and for setting a content of a caption signal, which represents the comparison result, to valid when the passed luminance signal exceeds the reference level.

4. A caption detection method as claimed in claim 3, further comprising the steps of:
storing the caption signal into a storage means; and
performing a writing control such that the caption signal corresponding to the image of the caption region is written into the storage means and a reading control such that the caption signal is read from the storage means:
wherein the reading control is performed when the caption signal corresponding to a caption insertion region in the image composed by the caption signal is generated.

5. A video display device, comprising:
a caption detection device as claimed in claim 1 for furnishing a caption signal;
means for inserting a caption at a shifted position into an image in dependence upon the caption signal, to obtain an output image, and
means for displaying the output image.

## Patentansprüche

1. Titeldetektionsanordnung mit:
- Mitteln zum Empfangen eines Leuchtdichtesignals entsprechend einem Eingangsbildsignal, das ein Bild darstellt, das ein Titelgebiet aufweist, in dem Titel wiedergegeben werden;
- Detektionsmitteln zum Detektieren der Änderungsrate eines Leuchtdichtepegels des Leuchtdichtesignal zum Erzeugen eines Änderungsratensignals entsprechend der Änderungsrate;
- Änderungsratenbeurteilungsmitteln zum Vergleichen eines Änderungsratenpegels des Änderungsratensignals mit einem Pegel eines Bezugssignals, das einzeln eingegeben wird und zum Bewerten eines Inhaltes eines Steuersignals, welches das Vergleichsergebnis darstellt, für gültig, wenn der Änderungsratenpegel den Bezugspegel übersteigt;
- Gate-Mitteln zum Ausliefern des Leuchtdichtesignals nur dann, wenn das Steuersignal von den Änderungsratenbeurteilungsmitteln einen gültigen Wert darstellen; und
- Titelbeurteilungsmitteln zum Vergleichen eines Leuchtdichtepegels des Leuchtdichtesignals, das von den Gate-Mitteln ausgeliefert wird mit einem vorbestimmten Bezugspegel und zum Beurteilen eines Inhaltes eines Titelsignals, der das Vergleichsergebnis darstellt, als gültig, wenn das Leuchtdichtesignal den Bezugspegel übersteigt.

2. Titeldetektionsanordnung nach Anspruch 1, weiterhin mit den nachfolgenden Elementen:
- Speichermitteln zum Speichern des Titelsignals, das von den Titelbeurteilungsmitteln ausgeliefert wird; und
- Steuersignalerzeugungsmitteln zum Durchführen einer Schreibsteuerung, derart, dass das Titelsignal entsprechend dem Bild des Titelgebietes in die Speichermittel eingeschrieben wird und zum Durchführen einer Auslesesteuerung, derart, dass das Titelsignal aus den Speichermitteln ausgelesen wird;
wobei die Auslesesteuerung durchgeführt wird, wenn das Titelsignal entsprechend einem Titeleinfügungsgebiet in das durch das Titelsignal zusammengesetzte Bild erzeugt wird.

3. Titeldetektionsverfahren, wobei dieses Verfahren die nachfolgenden Verfahrensschritte umfasst:
- das Empfangen eines Leuchtdichtesignal entsprechend einem Eingangsbildsignal, das ein Bild darstellt, das ein Titelgebiet umfasst, in dem Titel wiedergegeben werden;
- das Detektieren einer Änderungsrate eines Leuchtdichtepegels eines Leuchtdichtesignals zum Erzeugen eines Änderungsratensignals entsprechend der Änderungsrate;
- das Vergleichen eines Änderungsratenpegels des Änderungsratensignals mit einem Pegel eines Bezugssignals, das separat eingegeben worden ist und zum Bewerten eines Inhaltes eines Steuersignals, der das Vergleichsergebnis darstellt, als gültig, wenn der Änderungsratenpegel die Bezugspegel übersteigt;
- das Durchlassen des Leuchtdichtesignals nur dann, wenn das Steuersignal einen gültigen Wert darstellt;
- das Vergleichen eines Leuchtdichtepegels des durchgelassenen Leuchtdichtesignals mit einem vorbestimmten Bezugspegel und zum Bewerten eines Inhaltes eines Titelsignals, der das Vergleichsergebnis darstellt, als gültig, wenn das durchgelassene Leuchtdichtesignal den bezugspegel übersteigt.

4. Titeldetektionsverfahrfen nach Anspruch 3, weiterhin mit den nachfolgenden Verfahrensschritten:
- das Speichern des Titelsignals in einem Speichermittel; und
- das Durchführen einer Schreibsteuerung, so dass das Titelsignal, das dem Bild des Titelgebietes entspricht, in dem Speichermittel eingeschrieben wird und das Durchführen eine Lesesteuerung, so dass das Titelsignal aus dem Speichermittel ausgelesen wird;
wobei die Lesesteuerung durchgeführt wird, wenn das Titelsignal, das einem Titeleinfügegebiet in dem Bild entspricht, das durch das Titelsignal gebildet wird, erzeugt wird.

5. Videowiedergabeanordnung mit:
- einer Titeldetektionsanordnung nach Anspruch 1 zum Liefern eines Titelsignals;
- Mitteln zum Einfügen eines Titels an einer verlagerten Stelle in ein Bild, in Abhängigkeit von dem Titelsignal, zum Erhalten eines Ausgangsbildes, und
- Mitteln zum Wiedergeben des Ausgangsbildes.

## Revendications

1. Dispositif de détection de sous-titres comprenant :
- un moyen pour recevoir un signal de luminance correspondant à un signal d'image d'entrée qui représente une image comprenant une zone de sous-titres dans laquelle les sous-titres sont affichés;
- un moyen qui détecte le taux de variation pour détecter un taux de variation d'un niveau de luminance du signal de luminance pour produire un signal de taux de variation correspondant au taux de variation;
- un moyen qui évalue le taux de variation pour comparer un niveau de taux de variation du signal de taux de variation avec un niveau d'un signal de référence appliqué séparément et pour régler un contenu d'un signal de commande, qui représente le résultat de la comparaison, sur valide quand le niveau du taux de variation dépasse le niveau de référence;
- un moyen à effet de porte pour n'émettre le signal de luminance que si le signal de commande provenant du moyen qui évalue le taux de variation signifie un signal valide, et
- un moyen évaluateur de sous-titres pour comparer un niveau de luminance du signal de luminance émis par le moyen à effet de porte avec un niveau de référence prédéterminé et pour régler un contenu d'un signal de sous-titre, qui représente le résultat de la comparaison, sur valide quand le signal de luminance dépasse le niveau de référence.

2. Dispositif de détection de sous-titres suivant la revendication 1, comprenant en outre :
- un moyen de mémorisation pour mémoriser le signal de sous-titres provenant du moyen évaluateur de sous-titres, et
- un moyen générateur de signal de commande pour réaliser une commande d'écriture telle que le signal de sous-titres correspondant à l'image de la zone de sous-titres est écrit dans le moyen de mémorisation et une commande de lecture telle que le signal de sous-titres soit extrait par lecture du moyen de mémorisation;
dans lequel la commande de lecture est exécutée quand le signal de sous-titres correspondant à la zone d'insertion de sous-titres dans l'image composée par le signal de sous-titres est généré.

3. Procédé de détection de sous-titres comprenant les étapes suivantes:
- recevoir un signal de luminance correspondant à un signal d'image d'entrée qui représente une image comprenant une zone de sous-titres dans laquelle les sous-titres sont affichés;
- détecter un taux de variation d'un niveau de luminance du signal de luminance pour produire un signal de taux de variation correspondant au taux de variation;
- comparer un niveau de taux de variation du signal de taux de variation avec un niveau d'un signal de référence appliqué séparément et régler un contenu d'un signal de commande, qui représente le résultat comparatif, sur valide quand le niveau du taux de variation dépasse le niveau de référence;
- ne laisser passer le signal de luminance que si le signal de commande un signal valable;
- comparer un niveau de luminance du signal de luminance passé avec un niveau de référence prédéterminé et régler un contenu d'un signal de sous-titres, qui représente le résultat de la comparaison, sur valide quand le signal de luminance passé dépasse le niveau de référence.

4. Procédé de détection de sous-titres suivant la revendication 3, comprenant en outre les étapes suivantes:
- mémoriser le signal de sous-titres dans un moyen de mémorisation, et
- exécuter une commande d'écriture telle que le signal de sous-titres correspondant à l'image de la zone de sous-titre soit écrit dans un moyen de mémorisation et une commande de lecture telle que le signal de sous-titres soit extrait par lecture du moyen de mémorisation;
- dans lequel la commande de lecture est exécutée quand le signal de sous-titres correspondant à la zone d'insertion de sous-titres dans l'image composée du signal de sous-titres est généré.

5. Dispositif d'affichage vidéo, comprenant :
- un dispositif de détection de sous-titres suivant la revendication 1 pour fournir un signal de sous-titres;
- un moyen pour insérer un sous-titre à une position décalée dans une image en fonction du signal de sous-titres, afin d'obtenir une image de sortie, et
- un moyen pour afficher l'image de sortie.
